# EUROPEAN PATENT APPLICATION

(11) **EP 4 741 146 A1**
(43) Date of publication of application: **13.05.2026**
(21) Application number: 25845713.4
(22) Date of filing: 30.06.2025
(51) Int. Cl.: B29D 30/06, B29C 33/24

(54) **PRESSURIZING DEVICE AND VULCANIZER**

(30) Priority: 30.08.2024 CN 202411204682
(71) Applicant: ARP Technologies (Suzhou) Co., Ltd., Suzhou, Jiangsu 215216 (CN)
(72) Inventor: HUANG, Guiqiang, Suzhou, Jiangsu 215216 (CN); ADDANKI, Siva, Suzhou, Jiangsu 215216 (CN); LIU, Baolong, Suzhou, Jiangsu 215216 (CN)
(74) Representative: Tiburzi, Andrea
(86) International application number: PCT/CN2025/105558
(87) International publication number: WO 2026/045627

(57) **Abstract**

Provided are a pressurizing device and a vulcanizing machine. The pressurizing device is configured to provide a mold clamping force for a mold. The pressurizing device includes a base (1), multiple lower pull rods (2), multiple upper pull rods (3), a cross beam (4), and a nitrogen supply assembly (9). The provided pressurizing device in this application applies pressure to the upper side of the mold through a movement member (42) so that the mold clamping force is provided for the mold. Compared with the mode of applying pressure to the lower side of the mold upward through a force-applying oil cylinder in the related art, the pressurizing device does not need to overcome the gravity of the mold and related parts. Thus, the performance requirement on the parts providing the pressure can be reduced, thereby enabling the reduction of the use cost.

## Description

This application claims priority to Chinese Patent Application No. 202411204682.8 filed with the China National Intellectual Property Administration (CNIPA) on Aug. 30, 2024, the disclosure of which is incorporated herein by reference in its entirety.

### TECHNICAL FIELD

The present application relates to the technical field of vulcanizing equipment, for example, a pressurizing device and a vulcanizing machine.

### BACKGROUND

At present, tires are generally vulcanized through a vulcanizing machine. To ensure that a mold is provided with a sufficient mold clamping force, a pressurizing device is typically required to apply pressure to the mold in the vulcanization stage, so as to ensure the vulcanization quality.

A pressurizing device in the related art generally includes a force-applying oil cylinder disposed on a base. A lower support plate is pushed upward through the force-applying oil cylinder to apply a certain acting force to a lower mold, so as to provide a clamping force for the mold to vulcanize a tire. However, when applying the force, the force-applying oil cylinder not only needs to provide the clamping force for the mold to vulcanize the tire, but also needs to overcome the gravity of the lower support plate, the mold, and the tire. Therefore, a relatively high performance requirement is imposed on the force-applying oil cylinder, and the use cost is relatively high. That is, the oil cylinder and a hydraulic station adopted by the pressurizing device in the related art are costly. In addition, hydraulic oil has a leakage risk, and hydraulic oil leakage may pollute the equipment and the environment.

### SUMMARY

The present application provides a pressurizing device and a vulcanizing machine to solve the problems of high costs of an oil cylinder and a hydraulic station adopted by a pressurizing device in the related art, the risk of hydraulic oil leakage, and the pollution of the equipment and the environment caused by the hydraulic oil leakage.

An embodiment of the present application provides a pressurizing device configured to provide a mold clamping force for a mold. The pressurizing device includes a base, multiple lower pull rods, multiple upper pull rods, a cross beam, and a nitrogen supply assembly.

The base is configured to bear the mold.

The multiple lower pull rods are distributed on the peripheral side of the base.

The multiple upper pull rods are detachably connected to the multiple lower pull rods in a one-to-one correspondence.

The cross beam is disposed on the multiple upper pull rods and located above the base.

The cross beam includes a movement groove and a movement member, the cross beam is provided with the movement groove along a vertical direction, a groove opening of the movement groove faces downward, the movement member is in a sliding fit with the movement groove, the movement member is sealingly connected to a groove wall of the movement groove, and a movement cavity is formed between the movement member and the groove wall of the movement groove.

The nitrogen supply assembly is configured to supply nitrogen gas into the movement cavity so as to push the movement member to move downward along the movement groove.

In some embodiments, the pressurizing device further includes a hot plate.

The hot plate is disposed between the movement member and the mold, where the movement member transmits pressure to the upper side of the mold through the hot plate, and the hot plate is configured to isolate heat generated by the mold.

In some embodiments, the pressurizing device further includes a limit assembly.

The limit assembly is configured to limit the maximum movement distance of the movement member.

In some embodiments, the limit assembly includes a movement hole and a limit bolt.

The movement hole penetrates through and is disposed on the cross beam along the vertical direction.

The limit bolt is capable of passing through the movement hole and is in a clearance fit with the movement hole, the head of the limit bolt is capable of abutting against the upper side of the cross beam, the maximum distance between the head of the limit bolt and the upper side of the cross beam is smaller than the maximum movement distance of the movement member, and the tail of the limit bolt is screwed to the hot plate.

In some embodiments, the limit assembly further includes a connecting hole, an assembly hole, and a connecting bolt.

The connecting hole penetrates through and is disposed on the cross beam along the vertical direction.

The assembly hole penetrates through and is disposed on the hot plate along the vertical direction, where the assembly hole is a step hole.

The connecting bolt is capable of sequentially penetrating through the connecting hole and the assembly hole, where the connecting bolt is in a clearance fit with each of the connecting hole and the assembly hole, the connecting bolt includes an abutment surface, and the tail of the connecting bolt is screwed to the upper side of the mold and causes the abutment surface to abut against a step surface of the assembly hole.

In some embodiments, the pressurizing device further includes a quick-release assembly.

The quick-release assembly is disposed between the lower pull rod and the upper pull rod to control the connection or disconnection between the lower pull rod and the upper pull rod.

In some embodiments, the quick-release assembly includes a bayonet head and a bayonet groove.

The bayonet head is disposed at the lower end of the upper pull rod.

The bayonet groove is disposed at the upper end of the lower pull rod, where the bayonet head is capable of being engaged with and connected to the bayonet groove.

The lower pull rod is rotatably disposed on the base, and an adjustment gap is reserved between the bayonet head and the bayonet groove to ensure that the lower pull rod is rotatable.

In some embodiments, the pressurizing device further includes an adjustment assembly.

The adjustment assembly is disposed between the multiple upper pull rods and the cross beam, where the adjustment assembly is configured to adjust positions of the cross beam on the multiple upper pull rods.

In some embodiments, the adjustment assembly includes multiple adjustment nuts, transmission chains, and a servo motor.

The multiple adjustment nuts are in a threaded fit with the multiple upper pull rods in a one-to-one correspondence, and the multiple adjustment nuts are connected to multiple positions of the cross beam, respectively.

The transmission chains are sleeved on the multiple adjustment nuts and engaged with the multiple adjustment nuts.

The servo motor is disposed on the cross beam, where the servo motor is configured to drive the transmission chains to reciprocate.

An embodiment of the present application further provides a vulcanizing machine. The vulcanizing machine includes the preceding pressurizing device and a mold, and the pressurizing device is configured to provide a mold clamping force for the mold.

### BRIEF DESCRIPTION OF DRAWINGS

FIG. 1 is a rotated sectional view of a pressurizing device according to the present application.
FIG. 2 is an enlarged view of part A in FIG. 1.
FIG. 3 is an enlarged view of part B in FIG. 1.
FIG. 4 is a structural view of a nitrogen supply assembly according to the present application.
FIG. 5 is a structural view of a quick-release assembly according to the present application.
FIG. 6 is a structural view of part of an adjustment assembly according to the present application.
FIG. 7 is a structural diagram of a vulcanizing machine according to the present application.

### Reference list

- 1: base
- 2: lower pull rod
- 3: upper pull rod
- 4: cross beam
- 41: movement groove
- 42: movement member
- 43: movement cavity
- 44: sealing ring
- 5: hot plate
- 6: limit assembly
- 61: movement hole
- 62: limit bolt
- 63: connecting hole
- 64: assembly hole
- 65: connecting bolt
- 651: abutment surface
- 7: quick-release assembly
- 71: bayonet head
- 72: bayonet groove
- 8: adjustment assembly
- 81: adjustment nut
- 82: transmission chain
- 83: servo motor
- 9: nitrogen supply assembly
- 100: vulcanizing machine
- 200: pressurizing device
- 300: mold

### DETAILED DESCRIPTION

Before any embodiment of the present application is explained, it is to be understood that the present application is not limited to its application in the structural details and the arrangement of components set forth in the following description or shown in the preceding drawings.

In the present application, the term "comprising", "including", "having", or any other variation thereof is intended to encompass a non-exclusive inclusion so that a process, method, article, or apparatus that includes a series of elements not only includes those elements but also includes other elements that are not expressly listed or further includes elements that are inherent to such a process, method, article, or apparatus. Without further limitations, an element defined by the phrase "comprising a..." does not preclude the presence of additional identical elements in the process, method, article, or apparatus that includes this element.

In the present application, the term "and/or" is an association relationship describing associated objects and indicates that three relationships may exist. For example, one centrifugal vortex magnetic pump and/or another centrifugal vortex magnetic pump may represent the following three situations: the presence of only one centrifugal vortex magnetic pump, the presence of two different types of centrifugal vortex magnetic pumps at the same time, and the presence of only another type of centrifugal vortex magnetic pump. In addition, in the present application, the character "/" generally indicates an "and/or" relationship between associated objects before and after the character "/".

In the present application, the terms "connected", "combined", "coupled", or "mounted" may be directly connected, combined, coupled, or mounted and may also be indirectly connected, combined, coupled, or mounted. For example, the direct connection indicates that two parts or assemblies are connected together without an intermediate piece, and the indirect connection indicates that two parts or assemblies are separately connected to at least one intermediate piece and the two parts or assemblies are connected through the intermediate piece. Furthermore, "connected" or "coupled" are not limited to physical or mechanical connections or couplings and may include electrical connections or couplings.

In the present application, those of ordinary skill in the art will understand that a relative term used in conjunction with quantities or conditions (for example, "about", "approximately", "substantially", or the like) is inclusive of the stated value and has the meaning indicated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that a function implemented by an assembly may be implemented by one assembly, multiple assemblies, one part, or multiple parts. Similarly, a function implemented by a part may be implemented by one part, one assembly, or a combination of parts.

In the present application, the terms "upper", "lower", "left", "right", "front", "rear", and other orientation words are described by the orientations and position relationships shown in the drawings. In addition, in the context, it is to be understood that when an element is connected "above" or "below" another element, the element not only can be directly connected "above" or "below" another element but also can be indirectly connected "above" or "below" another element through an intermediate element. It is also to be understood that orientation words such as an upper side, a lower side, a left side, a right side, a front side, and a rear side not only represent positive orientations but also may be understood as lateral orientations. For example, the term "below" may refer to "directly below", "on a lower left", "on a lower right", "on a front lower side", "on a rear lower side", and the like.

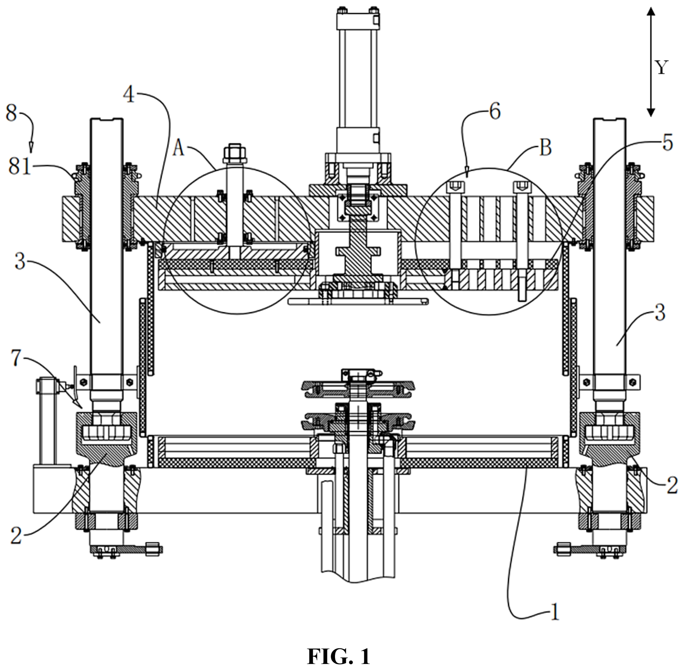

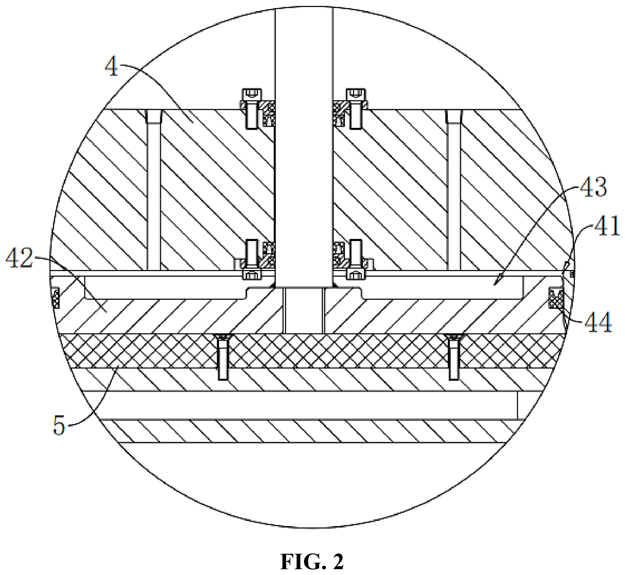

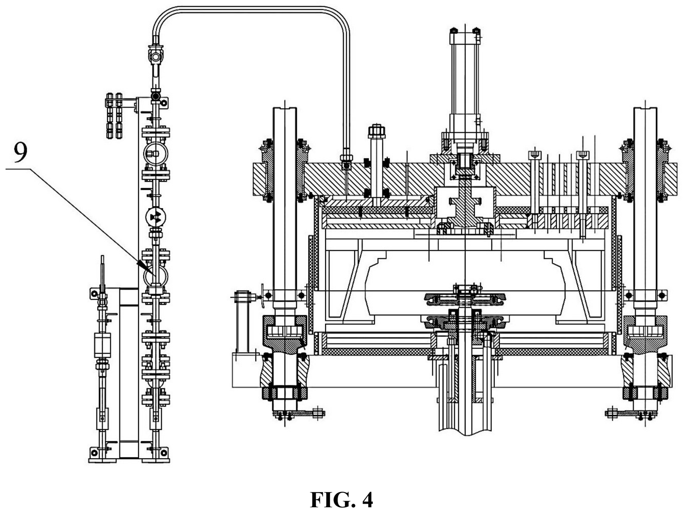

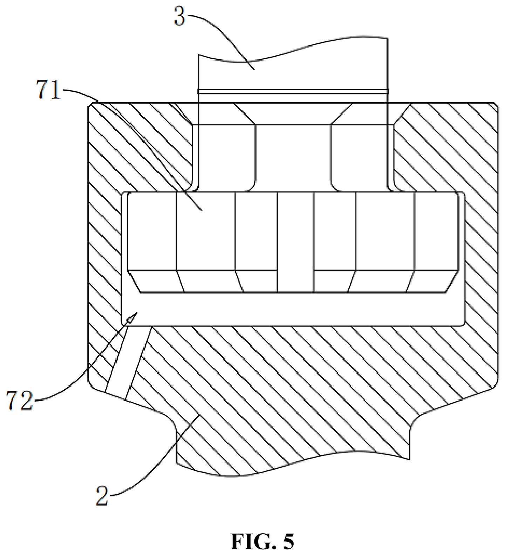

Referring to FIGS. 1 to 6, this embodiment provides a pressurizing device configured to provide a mold clamping force for a mold. The pressurizing device includes a base 1, multiple lower pull rods 2, multiple upper pull rods 3, a cross beam 4, and a nitrogen supply assembly 9.

The base 1 is configured to bear the mold. For the base 1, reference may be made to the structure in the related art. The base 1 includes multiple parts used in conjunction with a mold, for example, a tooling for fixing the mold.

For example, the multiple lower pull rods 2 are distributed on the peripheral side of the base 1. The multiple upper pull rods 3 are detachably connected to the multiple lower pull rods 2 in a one-to-one correspondence. The cross beam 4 is disposed on the multiple upper pull rods 3 and located above the base 1. The cross beam 4 includes a movement groove 41 and a movement member 42. The cross beam 4 is provided with the movement groove 41 along a vertical direction Y. A groove opening of the movement groove 41 faces downward. The movement member 42 is in a sliding fit with the movement groove 41. The movement member 42 is sealingly connected to a groove wall of the movement groove 41, and a movement cavity 43 is formed between the movement member 42 and the groove wall of the movement groove 41. The nitrogen supply assembly 9 is configured to supply nitrogen gas into the movement cavity 43 so as to push the movement member 42 to move downward along the movement groove 41.

The process where the mold clamping force is applied is as follows: the nitrogen gas is supplied into the movement cavity 43 by the nitrogen supply assembly 9 to push the movement member 42 to move downward along the movement groove 41, and then, the movement member 42 applies pressure to the upper side of the mold on the base 1, thereby providing the mold clamping force for the mold. The application of the mold clamping force is completed at this point.

A mold replacement process is as follows: the upper pull rods 3 are detached from the lower pull rods 3, afterwards, the cross beam 4 is removed from the upper side of the mold, then, the mold is detached from the base 1 and then another mold is placed on the base 1, and finally the upper pull rods 3 are assembled onto the lower pull rods 2. The replacement of the mold is completed at this point.

The pressure is applied to the upper side of the mold through the movement member 42 so that the mold clamping force is provided for the mold. Compared with the mode of applying pressure to the lower side of a mold upward through a force-applying oil cylinder in the related art, the pressurizing device does not need to overcome the gravity of the mold and related parts. Thus, the performance requirement on the parts providing the pressure can be reduced, thereby enabling the reduction of the use cost. It is further to be understood that in the mold replacement process, the upper pull rods 3 may be detached from the lower pull rods 2 so that the upper side of the mold cannot be obstructed. Thus, a relatively large operation space can be provided for replacing the mold, facilitating operation. In addition, a drive force is provided through the nitrogen supply assembly 9. A drive force is provided by a pressurizing device in the related art through the oil cylinder, and in comparison, nitrogen gas is clean energy, which is easy to obtain, has no pollution to the environment, and has a lower use cost. Moreover, traditional oil cylinders and hydraulic stations can be eliminated so that the risk of hydraulic oil leakage is avoided and the equipment and the environment are cleaner. In addition, there is no relative movement between the central mechanism of the pressurizing device and the base 1 of the pressurizing device, which can ensure the running precision of the central mechanism.

For the structure of the nitrogen supply assembly 9 and the working principle of the nitrogen supply assembly 9, reference may be made to the related art. It is also to be noted that for the mold, reference may be made to the structure in the related art, and the mold generally includes an upper mold and a lower mold. In this embodiment, the movement member 42 is configured to apply the pressure to the upper side of the upper mold.

In some embodiments, the pressurizing device further includes a hot plate 5 disposed between the movement member 42 and the mold. The movement member 42 transmits the pressure to the upper side of the mold through the hot plate 5. The hot plate 5 is configured to isolate heat generated by the mold. With this configuration, the influence of the heat generated by the mold on the pressurizing device can be reduced. It is to be noted that for the structure of the hot plate 5 and the working principle of the hot plate 5, reference may be made to the related art. The hot plate 5 typically includes a first plate and a second plate stacked together.

To prevent the movement member 42 from being separated from the movement groove 41 during use and causing inconvenience, the pressurizing device further includes a limit assembly 6. The limit assembly is configured to limit the maximum movement distance of the movement member 42.

In this embodiment, each of the cross beam 4 and the hot plate 5 is configured to be in the shape of a circular plate. Four movement grooves 41 are provided. The four movement grooves 41 are uniformly distributed on the cross beam 4 about the axis of the cross beam 4. Four movement members 42 are provided, which correspond to the number of movement grooves 41, and four limit assemblies 6 are provided. The four limit assemblies 6 are uniformly distributed on the cross beam 4 about the axis of the cross beam 4, and the multiple movement grooves 41 and the multiple limit assemblies 6 are arranged alternately. With this configuration, the pressure is applied to multiple positions of the hot plate 5 through the four movement members 42 so that the upper side of the mold is subjected to a more uniform force.

For example, the section line in FIG. 1 is a broken line. One half is used for sectioning the movement groove 41 and the movement member 42, and the other half is used for sectioning the limit assembly 6, so as to enable clearer illustration of the cooperative relationship between the limit assembly 6 and the movement member 42.

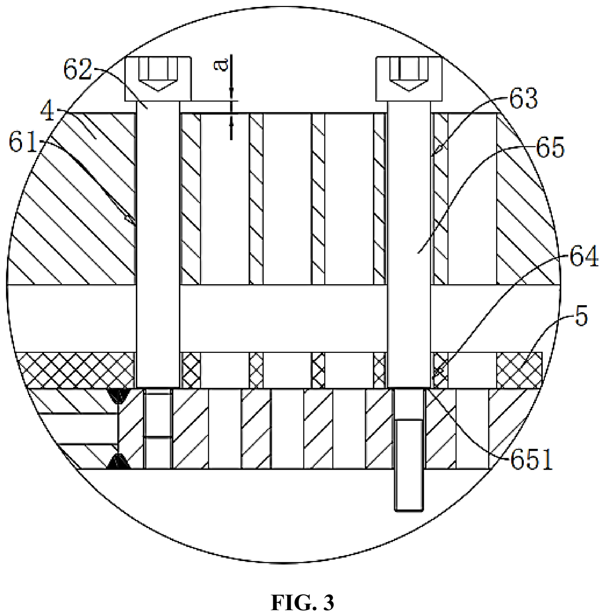

In this embodiment, the movement member 42 and the movement groove 41 are sealed through a sealing ring 44, and the sealing ring 44 is a vulnerable part and needs to be replaced regularly. To improve the convenience with which the sealing ring 44 is replaced, in this embodiment, the limit assembly 6 includes a movement hole 61 and a limit bolt 62. The movement hole 61 penetrates through and is disposed on the cross beam 4 along the vertical direction Y. The limit bolt 62 is capable of passing through the movement hole 61 and is in a clearance fit with the movement hole 61. The head of the limit bolt 62 is capable of abutting against the upper side of the cross beam 4, and the maximum distance between the head of the limit bolt 62 and the upper side of the cross beam 4 is smaller than the maximum movement distance of the movement member 42. The tail of the limit bolt 62 is screwed to the hot plate 5. As shown in FIG. 3, the distance between the head of the limit bolt 62 and the upper side of the cross beam 4 is a.

When the sealing ring 44 needs to be replaced, the tail of the limit bolt 62 is removed from the hot plate 5, and then the limit bolt 62 is taken out of the movement hole 61. That is, the movement member 42 can be taken out of the movement groove 41, thus implementing the replacement of the sealing ring 44 for sealing the gap between the movement member 42 and the movement groove 41. It is to be understood that the limit bolt 62 has a simple structure and is easy to operate. It is to be noted that the model of the limit bolt 62 may be selected according to an actual application scenario.

To ensure a closer fit between the hot plate 5 and the upper side of the mold to apply more uniform pressure to the upper side of the mold, the limit assembly 6 further includes a connecting hole 63, an assembly hole 64, and a connecting bolt 65. The connecting hole 63 penetrates through and is disposed on the cross beam 4 along the vertical direction Y. The assembly hole 64 penetrates through and is disposed on the hot plate 5 along the vertical direction Y, where the assembly hole 64 is a step hole. The connecting bolt 65 is capable of sequentially penetrating through the connecting hole 63 and the assembly hole 64. The connecting bolt 65 is in a clearance fit with each of the connecting hole 63 and the assembly hole 64. The connecting bolt 65 includes an abutment surface 651. The tail of the connecting bolt 65 is screwed to the upper side of the mold and causes the abutment surface 651 to abut against a step surface of the assembly hole 64. With this configuration, after the abutment surface 651 of the connecting bolt 65 abuts against the step surface of the assembly hole 64, the connecting bolt 65 is gradually tightened so that the hot plate 5 can be pressed tightly against the upper side of the mold.

The hot plate 5 is locked to the upper side of the mold through the connecting bolt 65 so that a closer fit between the hot plate 5 and the upper side of the mold can be ensured. It is also to be understood that the connecting bolt 65 penetrates through the connecting hole 63 and the assembly hole 64 and then is connected to the upper side of the mold, thereby facilitating mounting and dismounting. It is to be noted that the model of the connecting bolt 65 may be selected according to an actual application scenario.

In some embodiments, the pressurizing device includes a quick-release assembly 7. The quick-release assembly 7 is disposed between the lower pull rod 2 and the upper pull rod 3 to control the connection or disconnection between the lower pull rod 2 and the upper pull rod 3. This configuration helps improve the efficiency with which the mold is replaced. In this embodiment, the quick-release assembly 7 includes a bayonet head 71 and a bayonet groove 72. The bayonet head 71 is disposed at the lower end of the upper pull rod 3. The bayonet groove 72 is disposed at the upper end of the lower pull rod 2, and the bayonet head 71 can be engaged with and connected to the bayonet groove 72. It is to be noted that for the quick-release structure constituted by the bayonet head 71 and the bayonet groove 72, reference may be made to the related art. For example, after the bayonet head 71 is inserted into the bayonet groove 72, the bayonet head 71 or the bayonet groove 72 is rotated by a preset angle so that the bayonet head 71 is engaged with the bayonet groove 72, that is, the bayonet head 71 and the bayonet groove 72 are connected to each other. Conversely, the bayonet head 71 or the bayonet groove 72 is rotated so that the bayonet head 71 is disengaged from the bayonet groove 72, that is, the bayonet head 81 can be taken out from the bayonet groove 82, and the bayonet head 81 and the bayonet groove 82 are separated from each other.

In some embodiments, the lower pull rod 2 is rotatably disposed on the base 1, and an adjustment gap is reserved between the bayonet head 71 and the bayonet groove 72 to ensure that the lower pull rod 2 is rotatable. With this configuration, it is more convenient to rotate the lower pull rod 2, that is, it is more convenient to rotate the bayonet groove 72, thereby facilitating operation. It is to be noted that the configuration of the adjustment gap is well known to those skilled in the art.

The movement distance of the movement member 42 is limited by the depth of the movement groove 41. However, to ensure the production efficiency, the movement groove 41 may be configured to be shallow so that the movement path is shortened and the pressure is more efficiently applied to the mold. Thus, the pressurizing device is caused to be unable to clamp various molds with relatively large height differences.

To enable the pressurizing device to be suitable for various molds of different heights, the pressurizing device further includes an adjustment assembly 8. The adjustment assembly 8 is disposed between the multiple upper pull rods 3 and the cross beam 4. The adjustment assembly 8 is configured to adjust the positions of the cross beam 4 on the multiple upper pull rods 3. With this configuration, the pressurizing device can be suitable for molds of different heights, and the height of the cross beam 4 is adjusted so that the movement member 42 can apply pressure to the molds of different heights.

For example, the adjustment assembly 8 includes multiple adjustment nuts 81, transmission chains 82, and a servo motor 83. The multiple adjustment nuts 81 are in a threaded fit with the multiple upper pull rods 3 in a one-to-one correspondence, and the multiple adjustment nuts 81 are connected to multiple positions of the cross beam 4, respectively. The transmission chains 82 are sleeved on the multiple adjustment nuts 81 and engaged with the multiple adjustment nuts 81. The servo motor 83 is disposed on the cross beam 4, where the servo motor 83 is configured to drive the transmission chains to reciprocate. It is to be understood that the servo motor 83 drives the transmission chains 82 to move, the transmission chains 82 are engaged with the multiple adjustment nuts 81. That is, the servo motor 83 can simultaneously drive the multiple adjustment nuts 81 to rotate, thereby implementing synchronous lifting and lowering of the multiple positions of the cross beam 4 with higher efficiency. It is to be noted that for the connection manner between the servo motor 83 and the transmission chains 82, reference may be made to the related art.

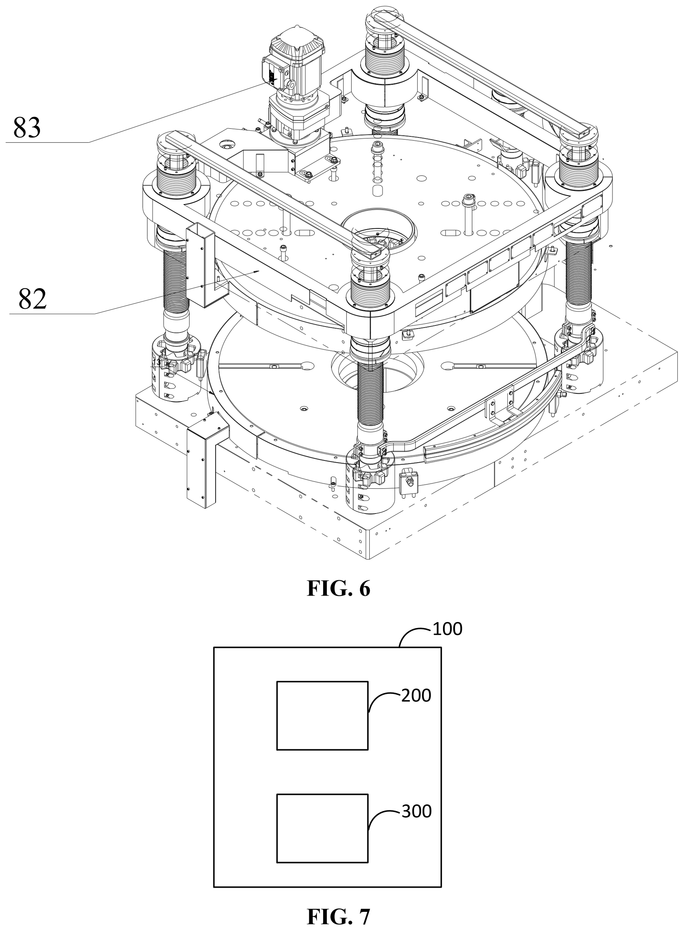

Referring to FIG. 7, this embodiment further provides a vulcanizing machine 100. The vulcanizing machine 100 includes the preceding pressurizing device 200 and a mold 300, and the pressurizing device 200 is configured to provide a mold clamping force for the mold 300. It is to be understood that the vulcanizing machine 100 including the preceding pressurizing device 200 has a low use cost and facilitates mold replacement.

The present application includes at least the characteristics described below.
1. In the pressurizing device provided in the present application, the drive force is provided through the nitrogen supply assembly 9. The drive force is provided by the pressurizing device in the related art through the oil cylinder, and in comparison, nitrogen gas is clean energy, which is easy to obtain, has no pollution to the environment, and has the lower use cost.
2. In the pressurizing device provided in the present application, the drive force is provided through the nitrogen supply assembly 9, and traditional oil cylinders and hydraulic stations can be eliminated so that the risk of hydraulic oil leakage is avoided and the equipment and the environment are cleaner.
3. The pressurizing device provided in the present application applies the pressure to the upper side of the mold through the movement member so that the mold clamping force can be provided for the mold. Compared with the mode of applying the pressure to the lower side of the mold upward through the force-applying oil cylinder in the related art, the pressurizing device does not need to overcome the gravity of the mold and the related parts. Thus, the performance requirement on the parts providing the pressure can be reduced, thereby enabling the reduction of the use cost.
4. In the mold replacement process of the pressurizing device provided in the present application, the upper pull rod may be detached from the lower pull rod so that the upper side of the mold cannot be obstructed. Thus, the relatively large operation space can be provided for replacing the mold, facilitating the operation.
5. In the pressurizing device provided in the present application, there is no relative movement between the central mechanism and the base, which can ensure the running precision of the central mechanism.
6. The vulcanizing machine provided in the present application includes the preceding pressurizing device so that the vulcanizing machine has the low use cost and facilitates the mold replacement.

## Claims

1. A pressurizing device configured to provide a mold clamping force for a mold and comprising:
a base (1) configured to bear the mold;
a plurality of lower pull rods (2) distributed on a peripheral side of the base (1);
a plurality of upper pull rods (3) detachably connected to the plurality of lower pull rods (2) in a one-to-one correspondence;
a cross beam (4) disposed on the plurality of upper pull rods (3) and located above the base (1);
wherein the cross beam (4) comprises a movement groove (41) and a movement member (42), the cross beam (4) is provided with the movement groove (41) along a vertical direction, a groove opening of the movement groove (41) faces downward, the movement member (42) is in a sliding fit with the movement groove (41), the movement member (42) is sealingly connected to a groove wall of the movement groove (41), and a movement cavity (43) is formed between the movement member (42) and the groove wall of the movement groove (41); and
a nitrogen supply assembly (9), wherein the nitrogen supply assembly (9) is configured to supply nitrogen gas into the movement cavity (43) so as to push the movement member (42) to move downward along the movement groove (41).

2. The pressurizing device according to claim 1, further comprising:
a hot plate (5) disposed between the movement member (42) and the mold, wherein the movement member (42) transmits pressure to an upper side of the mold through the hot plate (5), and the hot plate (5) is configured to isolate heat generated by the mold.

3. The pressurizing device according to claim 2, further comprising:
a limit assembly (6) configured to limit a maximum movement distance of the movement member (42).

4. The pressurizing device according to claim 3, wherein the limit assembly (6) comprises:
a movement hole (61) penetrating through and disposed on the cross beam (4) along the vertical direction; and
a limit bolt (62), wherein the limit bolt (62) is capable of passing through the movement hole (61) and is in a clearance fit with the movement hole (61), a head of the limit bolt (62) is capable of abutting against an upper side of the cross beam (4), a maximum distance between the head of the limit bolt (62) and the upper side of the cross beam (4) is smaller than the maximum movement distance of the movement member (42), and a tail of the limit bolt (62) is screwed to the hot plate (5).

5. The pressurizing device according to claim 4, wherein the limit assembly (6) further comprises:
a connecting hole (63) penetrating through and disposed on the cross beam (4) along the vertical direction;
an assembly hole (64) penetrating through and disposed on the hot plate (5) along the vertical direction, wherein the assembly hole (64) is a step hole; and
a connecting bolt (65) capable of sequentially penetrating through the connecting hole (63) and the assembly hole (64), wherein the connecting bolt (65) is in a clearance fit with each of the connecting hole (63) and the assembly hole (64), the connecting bolt (65) comprises an abutment surface (651), and a tail of the connecting bolt (65) is screwed to the upper side of the mold and causes the abutment surface (651) to abut against a step surface of the assembly hole (64).

6. The pressurizing device according to claim 1, further comprising:
a quick-release assembly (7), wherein the quick-release assembly (7) is disposed between a lower pull rod (2) of the plurality of lower pull rods (2) and an upper pull rod (3) of the plurality of upper pull rods (3) to control connection or disconnection between the lower pull rod (2) and the upper pull rod (3).

7. The pressurizing device according to claim 6, wherein the quick-release assembly (7) comprises:
a bayonet head (71) disposed at a lower end of the upper pull rod (3); and
a bayonet groove (72) disposed at an upper end of the lower pull rod (2), wherein the bayonet head (71) is capable of being engaged with and connected to the bayonet groove (72);
wherein the lower pull rod (2) is rotatably disposed on the base (1), and an adjustment gap is reserved between the bayonet head (71) and the bayonet groove (72) to ensure that the lower pull rod (2) is rotatable.

8. The pressurizing device according to claim 1, further comprising:
an adjustment assembly (8) disposed between the plurality of upper pull rods (3) and the cross beam (4), wherein the adjustment assembly (8) is configured to adjust positions of the cross beam (4) on the plurality of upper pull rods (3).

9. The pressurizing device according to claim 8, wherein the adjustment assembly (8) comprises:
a plurality of adjustment nuts (81), wherein the plurality of adjustment nuts (81) are in a threaded fit with the plurality of upper pull rods (3) in a one-to-one correspondence, and the plurality of adjustment nuts (81) are connected to a plurality of positions of the cross beam (4), respectively;
transmission chains (82) sleeved on the plurality of adjustment nuts (81) and engaged with the plurality of adjustment nuts (81); and
a servo motor (83) disposed on the cross beam (4), wherein the servo motor (83) is configured to drive the transmission chains (82) to reciprocate.

10. A vulcanizing machine, comprising the pressurizing device according to any one of claims 1 to 9 and a mold, wherein the pressurizing device is configured to provide a mold clamping force for the mold.
